## Europäisches Patentamt

(19) **European Patent Office**

**Office européen des brevets**

(11) Publication number: **0 181 298**
**A1**

---

(12) **EUROPEAN PATENT APPLICATION**

---

(21) Application number: **85850334.5**

(22) Date of filing: **24.10.85**

(51) Int. Cl.⁴: **F 16 L 58/16**
**F 16 L 58/18, B 65 H 81/00**

---

(30) Priority: **02.11.84 SE 8405511**

(43) Date of publication of application:
**14.05.86 Bulletin 86/20**

(84) Designated Contracting States:
**AT BE CH DE FR GB IT LI LU NL**

(71) Applicant: **AB AKERLUND & RAUSING**
**Box 22**
**S-221 00 Lund(SE)**

(72) Inventor: **Dike, Gunnar**
**Gyllenlackvägen 26**
**S-24021 Löddeköpinge(SE)**

(74) Representative: **Graudums, Valdis et al,**
**Backers Patentbyrä AB Drottninggatan 15**
**S-411 14 Göteborg(SE)**

---

(54) A method and a device for applying a wrapping around a tube-shaped body.

㊼ A pipe shell is provided with an outer cover of a flexible material by an automatic procedure. The invention provides also the machinery.

A web (11a) of the flexible material is withdrawn from a supply roller. A tape (20) having an adhesive on both sides is attached crosswise the web at the front edge.

A web length substantially equal to the circumference of the pipe shell or the tube-shaped body plus the width of the strip is withdrawn. A second tape (20) having adhesive on both sides is attached crosswise the web (17) at a distance from the front edge of the web equal to said web length.

The web which preferably has been provided with an adhesive (23, 24) in advance, at least partially, in the area between the strips is cut such that said web length is obtained.

The pipe-shell (17) is placed onto the cut web length with a cut-through in the shell extending in the direction of the generatrix in register with the cut edge of the web.

The adhesive is activated and the pipe shell is rolled on the cut web length such that is encompasses the pipe shell with an overlap corresponding to the width of the tape.

The procedure is repeated for a desired number of pipe shells and pipe shell diameters, respectively.

EP 0 181 298 A1

./...

FIG. 1

## A METHOD AND A DEVICE FOR APPLYING
## A WRAPPING AROUND A TUBE-SHAPED BODY

The present invention relates to a method and a device for applying a wrapping onto a tube-shaped body. More precisely the invention relates to a method and an arrangement for applying said wrapping onto a bulky tube-shaped body of a relatively soft material. A typical body comprises a tube-shaped body for insulation purposes, a so called pipe shell.

Such a pipe shell or tube-shaped body generally is manufactured from some fibre material, for instance glass wool. Presently the shells are applied around pipe conduits for forming an insulation, primarily a heat insulation, but also a sound insulation. The pipe shell technique has also been developed to comprise an external laminate of a metal foil in order to improve the protection, mainly the fire protection.

The problem is to offer a rational method and an efficient arrangement for applying such laminate onto the tube-shaped body.

Previously it has been used more or less manual methods, work intensive as such, but also involving a manual handling of cumbersome fibre material having certain health dangerous effects when handling such material wrongly.

The object of the present invention is to eliminate the shortcomings and offer a competitive alternative to known methods.

The invention provides a method for applying, by means of an activatable adhesive layer, onto a tube-shaped body of an insulating material, for instance glass wool, an external cover of a flexible material, for instance a laminate of plastics and metal foil, where a web of a flexible material is withdrawn from a supply roller onto a support by means of a withdrawing means. The method is characterized in that a first strip coated on both sides thereof by an adhesive material is attached crosswise the flexible web at the front edge thereof, that a web length substantially equal to the circumference of the tube-shaped body plus the width of said strip is withdrawn, that a second strip having an adhesive material on both sides thereof is attached crosswise the web at a distance from the front edge of the flexible material web corresponding to the said web length, that the web is cut just in front of the second strip, that the tube-shaped body is placed onto the cut web length with a cut-through region of the body extending in the direction of the generatrix in register with the cut edge of the web, that the adhesive layer is activated, and that the tube-shaped body is rolled onto the cut web length such that said web length is brought to encompass the tube-shaped body and cover the tube-shaped body with an overlap in the region of the first strip.

The adhesive preferably is applied onto the entire surface of the laminate before it is rolled to form said supply roller.

As an adhesive layer is selected a heat-sealable layer, for instance a polyolefine, ionomer, etc.

The flexible web preferably is selected as a laminate having a filler added thereto for forming a non-combustible laminate of for instance polypropylene having said filler and aluminium foil.

The invention also provides a device for practising the method. The device is distinguished by means for applying a strip having an adhesive coating on both sides thereof crosswise the flexible web of material in a first station, means for withdrawing in said first station onto a support a web length substantially equal to the circumference of the tube-shaped body plus the width of strip, by means in said first station for cutting said web length, by means for placing in said first station the tube-shaped body onto the support with a cut-through region in the body extending in the direction of the generatrix and in register with the cut edge, by means for rolling the tube-shaped body on the support simultaneously as activating the adhesive on the cut flexible web such that the web is brought to encompass the tube-shaped body.

Said means for rolling the tube-shaped body preferably comprises a roller device that is moveable in the longitudinal direction of the support.

Said means for placing the tube-shaped body onto the support comprises a lay down member moveable crosswise the support.

Said means for applying the strip having an adhesive material on both sides thereof comprises a device for applying a tape having adhesive on both sides thereof onto the flexible material web.

Said means for cutting the flexible material web comprises a knife moveable crosswise the web.

One embodiment of the invention will be described by reference to the accompanying drawings, where

Figure 1 is a schematic side view of a device according to the invention for applying a surface layer onto a tube-shaped body,

Figure 2 is a side view of the device,

Figure 3 is a schematic operation view showing the initial phase, and

Figure 4 shows a final phase.

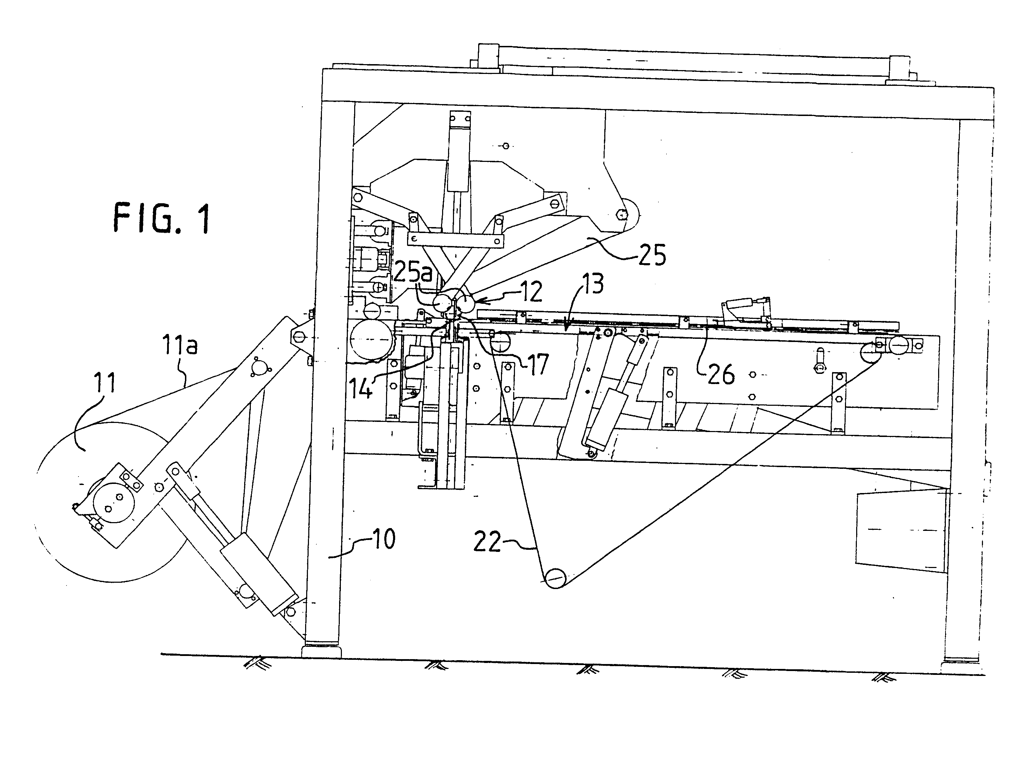

The reference numeral 10 in Figure 1 denotes a stand which supports a supply roller 11 comprising a flexible wrapping material, in the present case a laminate of a aluminium foil and polypropylene with a filler of a non-combustible material. The side of the laminate denoted by 11a in the Figure is coated by a well heat-sealable layer, for instance of an ionomer. The web 11a is fed into a station 12 and gripped by a pulling device 13. This device grips the web at the front edge thereof crosswise the width of the web in the position indicated by 14.

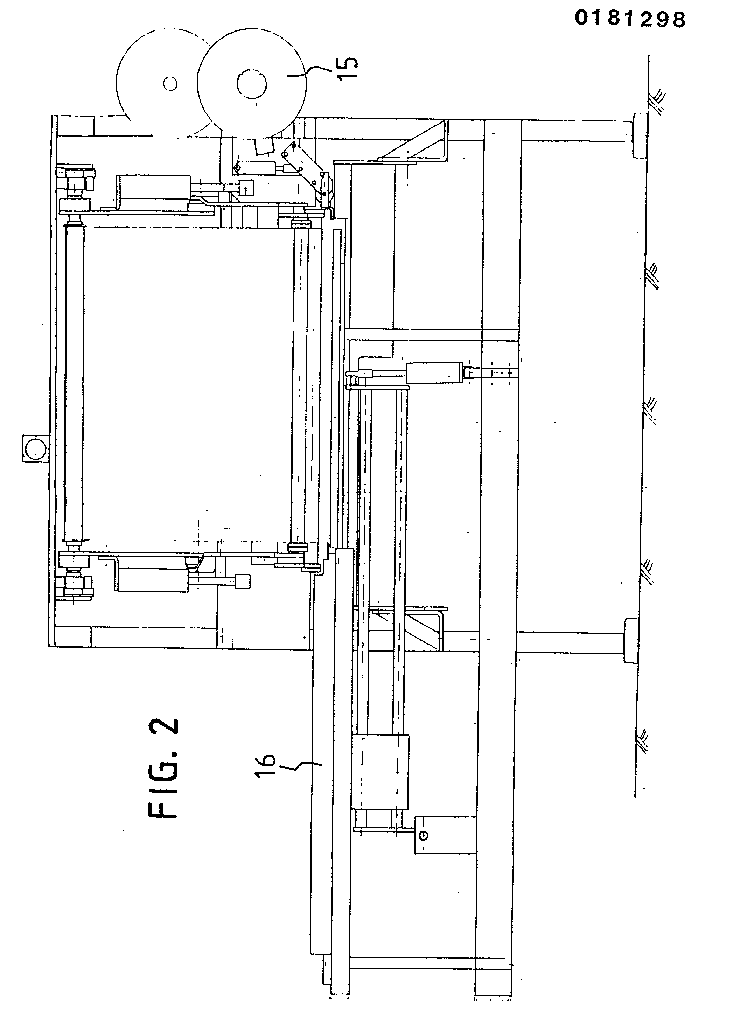

Before the web is pulled forwards (rightwards from the position 14) an applicator device 15 (Figure 2) for the tape having the adhesive on both sides is brought into operation. This device applies a strip of tape crosswise
the front edge of the web. The cover layer of the tape
which is turned upwards (seen according to Figure 1) is not
removed.

As soon as the tape is attached, the pulling device is
started and pulls forward a web length somewhat longer than
the circumference of the actual pipe-shaped body (pipe
shell) to be covered by the actual web.

As soon as the web length is available to the right of
position 14 in Figure 1, the tape applicator 15 is brought
into operation and applies a new strip of a tape 20 having
adhesive on both sides crosswise the web 11.

Thereafter an insertion device or a loading device 16
for pipe shells 17 is brought into operation. This places
the tube shells 17 such that a longitudinal cut-through
(slot) 18 in the pipe shell is turned downwards crosswise
the material web 11 just in front of the tape 20.

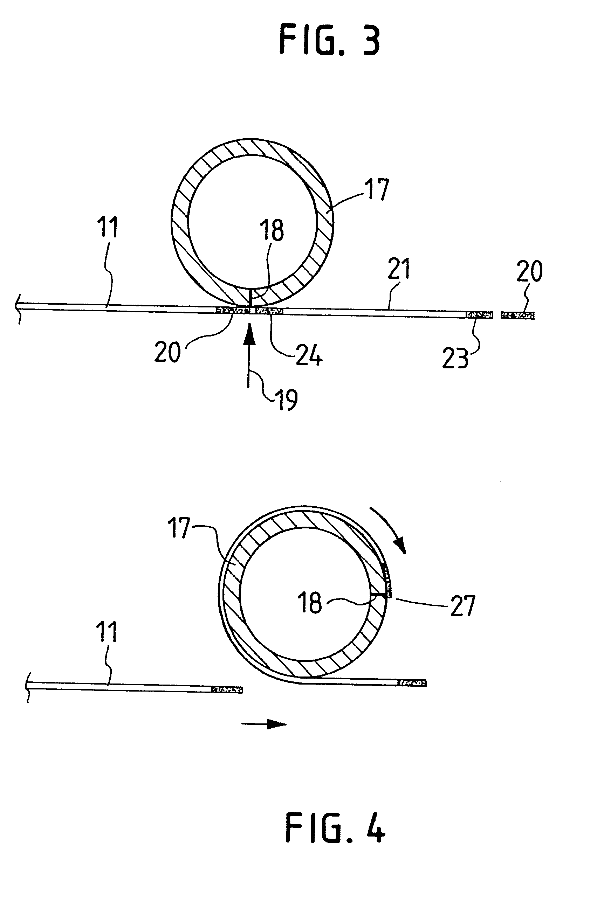

A knife device 19 (Figure 3) thereafter is operated and
cuts the material web just in front of the tape 20 last
applied.

The upper side 21 of the web in this case is coated by
an ionomer layer and this layer is heat activated for
sealing by a device 22. This device comprises mutually
spaced heat jaws (the distance is variable) and the idea is
that said jaws should activate only narrow regions 23, 24
just adjacent to the front tape 20 and adjacent to the cut
edge obtained by the knife 19.

A moveable carriage 25 comprising press rollers 25a
thereafter rolls the shell 17 onto the support 26 at the
same time as the laminate 11 is brought to tightly
encompass the circumferential surface of the shell 17.

The cut length of the laminate web is such that an
overlap is obtained in the position 27 (Figure 4), i.e. the
remaining cover strip of the tape having adhesive on both
sides is located on the other side of the cut-through 18.
When mounting it will be easy to remove the cover strip and
attach the hole unit by means of the actual strip after the
cover strip has been removed.

5  0181298

After the pipe shell has been provided with the
wrapping and removed from the support the procedure that
has been described is repeated.

Although a specific embodiment of the present invention
has been described by reference to the drawings, it is
realized that alternatives and modifications are possible
within the scope of the claims. Instead of having a
circular pipe-shaped body it is for instance possible to
have various polygonal cross sections if required. As an
adhesive it is always possible to use an adhesive that is
applicable in the machinery, for instance a hot-melt.

6                    0181298

CLAIMS

1.    A method of applying, by means of an activatable adhesive layer, an external cover of a flexible material, for instance a laminate of plastics and metal foil, onto a tube-shaped body of an insulating material, for instance glass wool, where a web of the flexible material is withdrawn by withdrawing means from a supply roller onto a support, c h a r a c t e r i z e d  in that a first strip having an adhesive on both sides thereof is attached crosswise the flexible material web at the front edge,

that a web length substantially equal to the circumference of the tube-shaped body plus the width of said strip is withdrawn,

that a second strip having an adhesive coating on both sides is attached crosswise the web at a distance from the front edge of the material web corresponding to said web length,

that the web is cut just in front of the second strip,

that the tube-shaped body is placed onto the cut web with a cut-through extending in the direction of the generatrix in register with the cut edge of the web,

that the adhesive layer is activated, and

that the tube-shaped body is rolled on the cut web such that the web is brought to encompass the tube-shaped body and cover the tube-shaped body with an overlap in the region of the first strip.

2.    A method according to claim 1, c h a r a c - t e r i z e d  in that said adhesive layer is applied such that it fully covers the surface of the laminate before it is rolled up for forming said supply roller.

3. A method according to claim 2, c h a r a c – t e r i z e d in that a heat-sealable layer, for instance of an ionomer, is selected as the adhesive layer.

4. A method according to anyone or any of the preceding claims, c h a r a c t e r i z e d in that a laminate of for instance polypropylene and aluminium foil having a filler of a non-combustible material in the plastics layer is selected as the flexible material web.

5. A device for carrying out the method according to anyone or any of the preceding claims for applying an external cover of a flexible material, for instance a laminate of plastics and metal foil, onto a tube-shaped body of an insulating material, for instance glass wool, c h a r a c t e r i z e d by means (15) for applying a strip having an adhesive on both sides in a first station crosswise the flexible material web, means (13) for withdrawing in said first station onto a support a web length substantially equal to the circumference of the tube-shaped body plus the width of the strip, means (19) in said first station for cutting the web, means in said first station for placing the tube-shaped body onto the support with a cut-through in the body extending in the direction of the generatrix and in register with the cut edge, means (25) for rolling the tube-shaped body on the support simultaneously as activating the adhesive on the cut flexible web such that the web is brought to encompass the tube-shaped body.

6. A device according to claim 5, c h a r a c – t e r i z e d in that said means for rolling the tube-shaped body comprises a roller device (25) moveable in the longitudinal direction of the support.

7. A device according to claim 6, c h a r a c – t e r i z e d in that said means for placing the pipe-shaped body onto the support comprises an applicator member (16) moveable crosswise the support.

8.  A device according to claim 7, c h a r a c -
t e r i z e d  in that said means for applying the strip
having an adhesive on both sides comprises a device (15)
for applying a tape having an adhesive on both sides onto
the flexible material web.

9.  A device according to claim 8, c h a r a c -
t e r i z e d  in that said means for cutting the flexible
material web comprises a knife (19) moveable crosswise the
web.

FIG. 1

FIG. 2

16

15

0181298

# FIG. 3

# FIG. 4

**European Patent Office**

**EUROPEAN SEARCH REPORT**

| DOCUMENTS CONSIDERED TO BE RELEVANT | | | EP 85850334.5 |
|---|---|---|---|
| Category | Citation of document with indication, where appropriate, of relevant passages | Relevant to claim | CLASSIFICATION OF THE APPLICATION (Int Cl 4) |
| A | CH - A - 531 984 (PIETRO ALBERTO) <br> -- | | F 16 L 58/16 <br> F 16 L 58/18 <br> B 65 H 81/00 |
| A | FR - A1 - 2 515 626 (COLIEGE ME-TALCO SA.-FR) <br> -- | | |
| A | US - A - 4 322 262 (COTTAM) <br> -- | | |
| A | US - A - 3 607 516 (ROYSTON) <br> ---- | | |
| | | | **TECHNICAL FIELDS SEARCHED (Int. Cl 4)** |
| | | | F 16 L 58/00 <br> B 65 H 81/00 |

The present search report has been drawn up for all claims

| Place of search | Date of completion of the search | Examiner |
|---|---|---|
| VIENNA | 17-01-1986 | SCHUGANICH |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82